# FASCICULE DE BREVET EUROPEEN

(11) **EP 3 069 767 B1**
(45) Date de publication et mention de la délivrance du brevet: **13.09.2017**
(21) Numéro de dépôt: 16160140.6
(22) Date de dépôt: 14.03.2016
(51) Int. Cl.: A63H 27/00, A63H 30/04, G08C 17/02, G05D 1/00, H04W 4/02, H04M 1/725

(54) **PROCÉDÉ D'OPTIMISATION DE L'ORIENTATION D'UN APPAREIL DE TÉLÉCOMMANDE PAR RAPPORT À UN DRONE VOLANT OU ROULANT**
VERFAHREN ZUR OPTIMIERUNG DER AUSRICHTUNG EINES FERNGESTEUERTEN GERÄTS IN BEZUG AUF EINE FLIEGENDE ODER ROLLENDE DROHNE
METHOD FOR OPTIMISING THE ORIENTATION OF A REMOTE-CONTROL DEVICE RELATIVE TO A FLYING OR WHEELED DRONE

(30) Priorité: 16.03.2015 FR 1552124
(43) Date de publication de la demande: 21.09.2016
(73) Titulaire: Parrot Drones, 75010 Paris (FR)
(72) Inventeur: BANDA, Luc, 94120 Fontenay-sous-Bois (FR); SEYDOUX, Henri, 75017 PARIS (FR)
(74) Mandataire: Dupuis-Latour, Dominique

(56) Documents cités:
- EP-A1- 1 826 993
- EP-A1- 2 613 213
- WO-A1-2013/080080
- WO-A1-2014/143678
- US-A1- 2013 156 080

## Description

L'invention concerne le pilotage à distance d'appareils motorisés, ci-après désignés généralement sous la dénomination de "drones".

Il peut s'agir de drones volants, notamment de drones à voilure tournante tels que des hélicoptères, quadricoptères et analogues. Mais l'invention n'est toutefois pas limitée au pilotage et à l'échange de données avec des appareils volants ; elle s'applique aussi bien à des appareils roulants évoluant sur le sol sous le contrôle d'un opérateur distant, le terme de "drone" devant être entendu dans son acception la plus générale.

Un exemple typique de drone volant est l'*AR.Drone 2.0* ou le *Bebop* (marques déposées) de Parrot SA, Paris, France, qui sont des quadricoptères équipés d'une série de capteurs (accéléromètres, gyromètres, altimètre), d'une caméra video frontale captant une image de la scène vers laquelle est dirigé le drone, et d'une caméra de visée verticale captant une image du terrain survolé. Un autre type de drone auquel peut s'appliquer l'invention est le *Jumping Sumo,* également de Parrot SA, qui est un jouet roulant et sauteur télécommandé pourvu de capteurs accélérométriques et gyrométriques et d'une caméra video frontale.

Les demandes WO 2010/061099 A2, EP 2 364 757 A1, EP 2 450 862 A1 et EP 2 613 213 A1 (Parrot) décrivent le principe de pilotage d'un drone par l'intermédiaire d'un téléphone ou tablette multimedia à écran tactile et accéléromètres intégrés, par exemple un *smartphone* de type *iPhone* ou une tablette de type *iPad* (marques déposées) exécutant un logiciel applicatif de télécommande spécifique, tel que dans l'exemple ci-dessus l'application mobile *AR Free Flight* (marque déposée).

Dans la suite de la description, on utilisera de façon générale le terme de "télécommande" ou "appareil" pour désigner ce moyen de télécommande, mais ce terme ne doit pas être entendu dans son acception étroite ; bien au contraire, elle englobe également les dispositifs fonctionnellement équivalents, notamment tous les dispositifs portables munis au moins d'un écran de visualisation et de moyens d'échange de données sans fil, tels que *smartphone,* baladeur multimedia non muni de fonctions de téléphonie, console de jeu, etc.

La caméra video frontale est utilisable pour un pilotage "en mode immer-sif" du drone, c'est-à-dire où l'opérateur se sert de l'image de la caméra de la même façon que s'il se trouvait lui-même à bord du drone. Elle peut également servir à capter des séquences d'images d'une scène vers laquelle se dirige le drone, l'opérateur se servant du drone de la même façon que d'une caméra qui, au lieu d'être tenue à la main, serait portée par le drone. Les images recueillies peuvent être enregistrées, mises en ligne sur des sites web, envoyées à d'autres internautes, partagées sur des réseaux sociaux, etc.

L'appareil incorpore également les divers organes de contrôle nécessaires à la détection des commandes de pilotage et à l'échange bidirectionnel de données via une liaison radio de type réseau local sans fil *WiFi* (IEEE 802.11) ou *Bluetooth* directement établie avec le drone. Son écran tactile affiche l'image captée par la caméra frontale du drone, avec en superposition un certain nombre de symboles permettant le contrôle du vol et l'activation de commandes par simple contact du doigt de l'opérateur sur l'écran tactile. Cette liaison radio bidirectionnelle comprend une liaison descendante (du drone vers l'appareil) pour transmettre des trames de données contenant le flux video issu de la caméra et des données de vol ou indicateurs d'état du drone, et une liaison montante (de l'appareil vers le drone) pour transmettre les commandes de pilotage.

On comprendra que la qualité de la liaison radio entre la télécommande et le drone est un paramètre essentiel, en particulier pour assurer une portée satisfaisante et avec le moins de latence possible. Les volumes de données transmis sont en effet importants, notamment du fait du besoin très élevé en débit video de la liaison descendante (typiquement de l'ordre de 2,5 à 3 Mbit/seconde), et toute dégradation de la qualité de la liaison radio aura un impact sur le débit alloué aux commandes par la liaison montante, d'où il va s'ensuivre une dégradation de la qualité de transmission de la liaison montante et une réduction de la portée radio, créant un risque de pertes sporadiques de trames contenant les commandes produites par l'appareil, avec pour conséquence un contrôle du drone devenant très difficile.

Au niveau de l'appareil de télécommande, la liaison radio utilise une antenne incorporée à l'appareil qui, en émission, rayonne la puissance du circuit émetteur HF supportant la liaison montante et, en réception, capte les signaux émis par le drone, notamment les signaux de flux video et de données de vol.

Avec ce type d'appareil de télécommande, l'utilisateur pilote le drone en tenant l'appareil, typiquement à deux mains en serrant l'appareil de chaque côté entre paume et pouce ou entre index et pouce, les pouces posés sur l'écran, de manière à pouvoir piloter le drone en inclinant plus ou moins l'appareil selon des axes de tangage et de roulis afin de répliquer le même mouvement par le drone, et en contrôlant divers paramètres en touchant d'un doigt des icônes mobiles ou des boutons affichés sur l'écran tactile de l'appareil.

On comprendra que, dans ces conditions, les mains se placent naturellement dans les coins du boitier de l'appareil, recouvrant plus ou moins d'espace sur les bords. Or c'est généralement à cet endroit que sont placés les antennes *WiFi* et/ou *Bluetooth* de l'appareil (les antennes *WiFi* et *Bluetooth,* distinctes, n'étant pas nécessairement situées au même endroit).

Les ondes radio des liaisons *Bluetooth* et *WiFi,* qui se situent dans des bandes de fréquences très hautes (respectivement de l'ordre de 2,4 GHz et 5,1-5,7 GHz) sont très fortement atténuées par le corps humain, et en l'occurrence par les mains de l'utilisateur si celles-ci se trouvent positionnées à proximité de l'antenne utilisée par l'appareil pour communiquer avec le drone.

En pratique, l'emplacement de ces antennes peut varier considérablement d'un modèle d'appareil à un autre, de sorte que la puissance du signal rayonné par l'appareil vers le drone, comme la sensibilité de réception du signal reçu en provenance du drone, seront très dépendants de la position et de l'orientation de l'appareil que l'utilisateur tient entre ses mains. Plus précisément, l'appareil étant généralement tenu avec son écran en position "paysage", si l'antenne se situe sur un côté long de l'appareil et qu'elle se trouve sur le côté tourné vers le drone, cette position sera optimale. En revanche, si l'appareil est tenu en sens inverse, c'est-à-dire avec l'antenne se trouvant sur le côté le plus proche de l'utilisateur, cette configuration est particulièrement défavorable car non seulement l'antenne sera tournée vers l'utilisateur et non vers le drone, mais encore le corps de l'utilisateur perturbera fortement la propagation des ondes radio par effet d'écran de masse, conduisant à une dégradation importante de la qualité de la liaison radio.

De façon comparable, si l'antenne se situe dans une région proche d'un coin de l'appareil, selon la façon dont l'utilisateur tient cet appareil, il pourra se faire que cette antenne se situe juste à l'endroit de son pouce qui va alors faire écran et gêner considérablement la propagation des ondes radio dans la région de l'antenne.

Ainsi, on constate que la puissance du signal rayonné vers le drone, et la sensibilité du signal reçu - donc par voie de conséquence la portée et la latence de la liaison radio - sont très dépendants de la manière dont l'utilisateur tient l'appareil de télécommande, notamment de la manière dont il a orienté cet appareil et dont il le tient entre ses mains.

Le but de l'invention est de résoudre ce problème, en proposant un moyen d'optimiser l'orientation de l'appareil de télécommande par rapport au drone et, par voie de conséquence, maximiser l'énergie radio rayonnée par la télécommande (en émission) et le niveau du signal radio capté (en réception).

L'idée de base de l'invention consiste, après avoir reconnu le modèle de télécommande utilisé (qui donne l'emplacement de l'antenne active utilisée avec ce modèle), à faire en sorte que la position de l'antenne soit celle qui procure la meilleure liaison radio, c'est-à-dire que le lobe principal du diagramme de rayonnement de l'antenne active soit dirigé vers l'avant (c'est-à-dire vers le drone et non vers l'utilisateur), et/ou que l'antenne située dans un coin du boitier de l'appareil ne soit pas couverte par un pouce ou par le creux de la main.

Ce problème est notamment abordé par le WO 2014/143678 A1, qui propose de donner à un utilisateur des indications pour réorienter son téléphone portable, possiblement utilisable pour la télécommande d'un drone, à partir d'une table de conditions associées à des paramètres de configuration d'antenne.

Dans la solution proposée par la présente invention, le dispositif ne délivre pas à l'utilisateur d'instructions à proprement parler de réorientation du dispositif, mais commande l'affichage de l'image sur l'écran tactile de telle sorte que le haut d'une scène captée par la caméra du drone apparaisse à l'utilisateur :
- en bas de l'écran si l'orientation de l'antenne active ne correspond pas à la direction dans laquelle se trouve le drone, et
- en haut de l'écran si l'orientation de l'antenne active correspond à la direction dans laquelle se trouve le drone.

Dès lors :
- dans le premier cas, l'image sera affichée à l'envers et l'utilisateur va naturellement retourner l'appareil de télécommande pour rétablir une image correcte - et cette inversion va précisément faire en sorte que l'antenne se trouvera orientée dans la position optimale, tournée vers l'avant donc vers le drone, au lieu d'être tournée vers l'utilisateur ;
- dans le second cas l'utilisateur (à qui l'on n'a rien demandé et qui ne s'est aperçu de rien) se servira normalement de l'appareil pour télécommander le drone.

Plus précisément, l'invention propose un procédé d'optimisation de l'orientation d'un appareil de télécommande par rapport à un drone volant ou roulant télécommandé par cet appareil, l'appareil de télécommande et le drone communiquant entre eux par une liaison radio.

De manière connue, notamment d'après le EP 2 613 213 A1 précité, le drone comprend une caméra video embarquée, et des moyens émetteurs-récepteurs pour ladite liaison radio. L'appareil de télécommande comprend un corps d'appareil apte à être tenu à la main par un utilisateur, des moyens émetteurs-récepteurs pour ladite liaison radio, comprenant au moins une antenne d'émission-réception placée en une position prédéterminée par rapport au corps de l'appareil, et un écran tactile apte à afficher une image captée par la caméra du drone et transmise à l'appareil via ladite liaison radio, et à détecter un contact sur la surface de l'écran d'au moins un doigt de l'utilisateur tenant le corps de l'appareil.

De façon caractéristique de l'invention, le procédé comprend les étapes suivantes :
a) détermination de l'antenne active utilisée par les moyens émetteurs-récepteurs de l'appareil pour ladite liaison radio ;
b) détermination du modèle de l'appareil utilisé ;
c) recherche dans une table d'une information d'orientation relative de l'antenne active par rapport au corps de l'appareil,
   ladite table étant une table d'un logiciel de pilotage préalablement chargé et mémorisé dans l'appareil,
   les entrées respectives de ladite table donnant, pour chaque modèle d'appareil susceptible d'être utilisé pour télécommander le drone, l'information correspondante d'orientation relative de l'antenne de ce modèle ; et
d) affichage de l'image sur l'écran tactile de sorte que le haut d'une scène captée par la caméra du drone apparaisse à l'utilisateur en bas de l'écran si l'orientation relative de l'antenne active par rapport au corps de l'appareil ne correspond pas à la direction dans laquelle se trouve le drone, et apparaisse à l'utilisateur en haut de l'écran si l'orientation relative de l'antenne active par rapport au corps de l'appareil correspond à la direction dans laquelle se trouve le drone.

L'information d'orientation de l'antenne active par rapport au corps de l'appareil est avantageusement une information booléenne indiquant de quel côté se situe l'antenne par rapport à un axe médian du corps de l'appareil, cet axe médian s'étendant entre deux côtés opposés de l'appareil aptes à être tenus chacun par une main respective de l'utilisateur.

Dans ce cas, dans une forme préférentielle de mise en oeuvre de l'invention, l'étape d) comprend un forçage inconditionnel du sens d'affichage de l'image sur l'écran tactile de telle sorte que, par rapport audit axe médian, le haut d'une scène captée par la caméra du drone se situe du même côté de l'écran que le côté où se situe l'antenne active.

Dans tous les cas, si l'étape c) de recherche ne permet pas de trouver une entrée correspondant à l'identifiant du modèle d'appareil, l'étape d) n'est pas exécutée et un message d'avertissement est affiché sur l'écran de l'appareil.

Lorsque les moyens émetteurs-récepteurs de l'appareil comprennent des moyens émetteurs-récepteurs aptes à opérer dans une pluralité de bandes radio distinctes correspondant à une pluralité d'antennes respectives différentes, alors les entrées respectives de ladite table donnent l'information d'orientation relative de l'antenne active pour chaque modèle d'appareil susceptible d'être utilisé ainsi pour chaque bande radio susceptible d'être utilisée par un modèle donné, et l'étape a) de détermination de l'antenne active comprend la sélection, parmi la pluralité d'antennes de l'appareil, de l'antenne compatible avec la bande radio utilisée par les moyens émetteurs-récepteurs du drone.

Dans une autre forme de mise en oeuvre du procédé, il est en outre prévu une étape préalable de détermination d'une information d'orientation relative de l'appareil par rapport à l'utilisateur, et l'étape d) est exécutée conditionnellement en fonction de l'information d'orientation relative de l'appareil par rapport à l'utilisateur. La détermination de l'information d'orientation relative de l'appareil par rapport à l'utilisateur peut notamment être mise en oeuvre par mesure accélérométrique ou inclinométrique d'une orientation absolue du corps de l'appareil, ou par détection de la région de la surface de l'écran en contact avec le(s) doigt(s) de l'utilisateur tenant le corps de l'appareil.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue générale montrant un drone piloté par un appareil de télécommande.
La Figure 2 montre l'appareil de télécommande tenu à la main par l'utilisateur pendant le pilotage du drone.
La Figure 3 illustre les actions prises par la mise en oeuvre du procédé de l'invention.
La Figure 4 est un exemple de table donnant les positions des antennes pour différents modèles d'appareils.
La Figure 5 est un organigramme général montrant les étapes successives du procédé de l'invention, dans un mode de mise en oeuvre préférentiel.

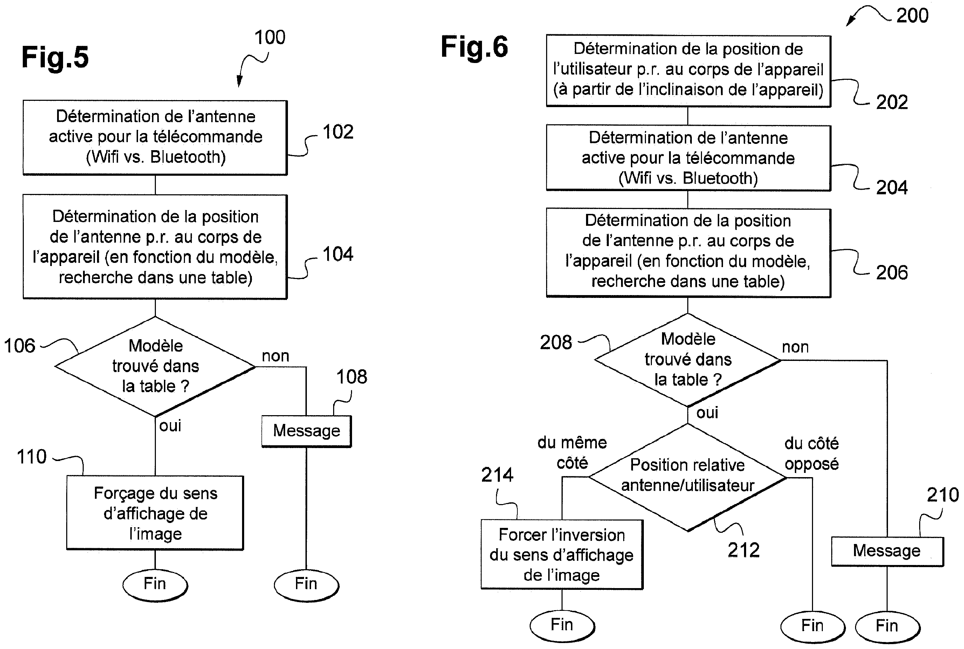

La Figure 5 est un organigramme général d'une variante de mise en oeuvre de l'invention.

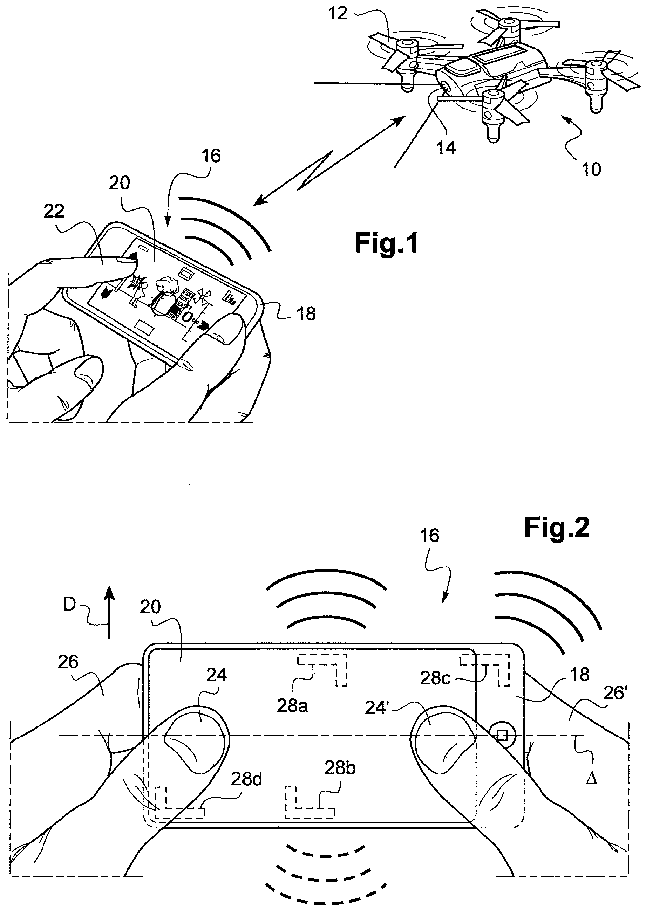

Sur la Figure 1, la référence 10 désigne de façon générale un drone, qui est par exemple un quadricoptère tel que le modèle *Bebop Drone* de Parrot SA, Paris, France. Ce drone comporte quatre rotors coplanaires 12 dont les moteurs sont pilotés indépendamment par un système intégré de navigation et de contrôle d'attitude. Il est pourvu d'une caméra 14 à visée frontale permettant d'obtenir une image de la scène vers laquelle se dirige le drone, par exemple une caméra grand-angle haute définition à capteur CMOS de résolution 1920 x 1080 pixels avec une fréquence de rafraichissement du flux video de 30 fps (image par seconde).

Le drone 10 est piloté par un appareil de télécommande distant 16 tel qu'un téléphone ou tablette multimédia à écran tactile et accéléromètres intégrés, par exemple un *smartphone* de type *iPhone* (marque déposée) ou autre, ou une tablette de type *iPad* (marque déposée) ou autre. Il s'agit d'un appareil standard, non modifié si ce n'est le chargement d'un logiciel applicatif spécifique tel que l'application mobile *AR Free Flight* (marque déposée) pour contrôler le pilotage du drone 10 et la visualisation des images prises par la caméra embarquée 14.

L'appareil 16 comprend un corps 18 et un écran tactile 20 affichant l'image de la scène captée par la caméra embarquée du drone 14, avec en superposition un certain nombre de symboles permettant l'activation de commandes de pilotage (montée/descente, etc.) par simple contact d'un doigt 22 de l'utilisateur sur les symboles affichés à l'écran. L'appareil 16 est également pourvu de capteurs d'inclinaison permettant de contrôler l'attitude du drone en imprimant à l'appareil des inclinaisons correspondantes selon des axes de roulis et de tangage pour le faire avancer ou reculer. Les actions imprimées à l'appareil par l'utilisateur sont interprétées par le logiciel applicatif qui les transforme en signaux de commande à destination du drone.

Comme on peut le voir sur la Figure 2, qui illustre l'appareil 16 tenu à la main par l'utilisateur, celui-ci tient normalement l'appareil en mode "paysage", qui correspond au format de la caméra 14 du drone et donc de l'image qui est restituée sur l'écran 20. Pour cela, l'appareil 16 est généralement fermement tenu à deux mains entre les pouces 24, 24' et les index ou les paumes 26, 26', de manière à pouvoir être incliné en tangage et en roulis pour que le drone réplique ces inclinaisons et produise des déplacements correspondants, vers l'avant ou vers l'arrière ou sur les côtés.

Les références 28a à 28d illustrent différentes configurations possibles de l'antenne active, incorporée au corps 18 de l'appareil, pour l'échange de données avec le drone par la liaison radio :
- si l'antenne se trouve dans la position illustrée 28a, cette configuration est optimale, car l'antenne est tournée vers le drone (celui-ci étant dans la direction D) et n'est pas occultée par les doigts de l'utilisateur ;
- en revanche, si l'antenne active est située à la position 28b, de l'autre côté de l'axe longitudinal médian Δ de l'appareil 16, l'antenne va rayonner vers l'utilisateur, donc de façon beaucoup moins efficace ;
- dans le cas où, pour le modèle d'appareil considéré, l'antenne est située dans un coin du corps 18 de l'appareil, à la position illustrée en 28c, cette position est optimale, puisqu'elle est tournée vers le drone (direction D) et n'est pas occultée par les doigts de l'utilisateur ;
- en revanche, si l'antenne se trouve dans un coin opposé comme illustré en 28d, cette configuration est particulièrement défavorable puisque non seulement l'antenne est tournée vers l'utilisateur au lieu d'être tournée vers le drone, mais qu'au surplus les doigts 24, 26 de l'utilisateur viennent l'occulter et perturber fortement la propagation des ondes radio.

L'idée de base de l'invention réside dans le fait que, si l'antenne se trouve dans une configuration défavorable (comme en 28b et 28d), alors dans ce dernier cas il suffit de retourner à plat d'un demi-tour le corps 18 de l'appareil 16 pour rétablir la configuration optimale, c'est-à-dire que cette simple manoeuvre permettra de passer de la position 28b à la position 28a, ou de la position 28d à la position 28c.

Il serait certes possible de mesurer par exemple le niveau du signal reçu par l'antenne (niveau RSSI) et demander à l'utilisateur de tester les positions possibles afin qu'il choisisse celle procurant le meilleur niveau de réception.

L'invention propose une autre solution à ce problème, qui n'implique pas de mesure du niveau du signal reçu, et donc peut être utilisée avant même que des données radio aient été échangées entre l'appareil et le drone.

L'idée de base consiste, si l'on connait *a priori* l'endroit où se situe l'antenne active au sein du corps de l'appareil, à déterminer, à partir d'une table donnant cette information en fonction du modèle de l'appareil, une information d'orientation relative de l'antenne active par rapport au corps de l'appareil et :
- si l'antenne est orientée "du mauvais côté", c'est-à-dire tournée vers l'utilisateur, alors faire en sorte que l'affichage de l'image soit inversé (haut/bas), conduisant l'utilisateur à retourner spontanément d'un demi-tour l'appareil qu'il tient entre ses mains pour rétablir le sens correct de l'image qui lui est présentée ;
- si l'antenne se trouve "du bon côté", c'est-à-dire tournée vers le drone dans une région libre de tout contact avec la main de l'utilisateur, faire en sorte que l'affichage se présente non-inversé et laisser l'utilisateur poursuivre l'utilisation de l'appareil.

Concrètement, la solution préférentielle consiste à gérer l'affichage de manière que le "haut" de l'image affichée soit systématiquement situé du même côté (par rapport à un axe horizontal médian de l'appareil) que l'antenne qui sera utilisée. De ce fait, si l'antenne se situe "du mauvais côté" l'affichage sera de fait présenté "à l'envers" du point de vue de l'utilisateur, tandis que dans le cas contraire il se présentera "à l'endroit".

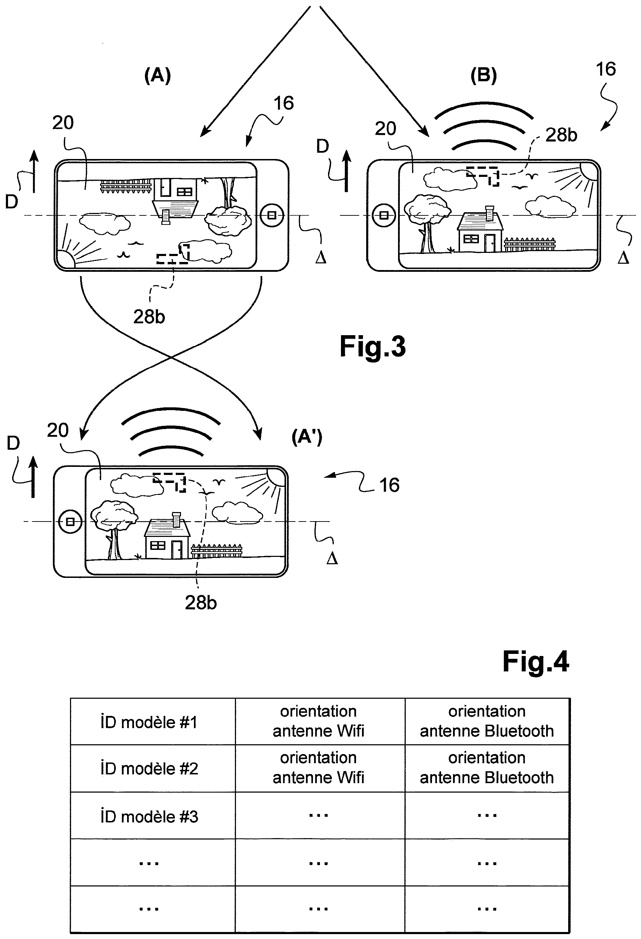

Ce principe est illustré Figure 3 : on a illustré en (A) le cas où l'antenne 28b se trouve, par rapport à l'axe longitudinal Δ de l'appareil, du côté tourné vers l'utilisateur et non du côté tourné vers le drone (direction D) : dans ce cas, on force l'affichage en un "mode antinaturel" avec inversion de l'image. L'utilisateur va alors spontanément retourner l'appareil (un demi-tour à plat) jusqu'à la position (A') où l'antenne 28b se trouvera convenablement orientée, dans la direction D du drone, l'affichage étant redevenu "naturel" pour l'utilisateur.

Dans le cas contraire où, au début du processus, l'antenne 28b se trouve par rapport à l'axe longitudinal Δ du côté opposé à l'utilisateur, c'est-à-dire du côté tourné vers le drone (direction D), cette configuration (B) est considérée comme optimale et aucune action particulière n'est prise, l'affichage sur l'écran 20 étant maintenu "naturel".

Pour la mise en oeuvre de ce procédé, il est nécessaire de connaitre a *priori* l'orientation relative de l'antenne par rapport au corps 18 de l'appareil, pour chaque modèle d'appareil envisageable.

À cet effet, une table est mémorisée au sein du logiciel applicatif de pilotage préalablement chargé et mémorisé dans l'appareil de télécommande. Ce logiciel étant un logiciel universel, compatible avec de multiples modèles d'appareils, la table inclut, comme illustré Figure 4, une pluralité de rubriques avec pour chacune une entrée constituée par un identifiant de modèle et des champs donnant, pour chaque modèle, l'emplacement de l'antenne *WiFi* et de l'antenne *Bluetooth.* L'information d'emplacement donne l'orientation relative de l'antenne par rapport au corps de l'appareil, et peut être simplement une donnée booléenne indiquant de quel côté se situe l'antenne par rapport à l'axe médian Δ du corps de l'appareil, axe défini comme étant l'axe s'étendant entre les deux côtés entre lesquels l'appareil est tenu à la main par un utilisateur regardant l'écran en mode "paysage".

La Figure 5 est un organigramme décrivant l'enchainement 100 des différentes étapes de mise en oeuvre de ce procédé, dans une forme de mise en oeuvre préférentielle.

Une première étape (bloc 102) consiste à déterminer celle des antennes qui sera utilisée par la télécommande, *WiFi* ou bien *Bluetooth,* selon le type de drone que l'on souhaite piloter (certains fonctionnant en *Bluetooth,* d'autres en *WiFi*)*.*

Connaissant ainsi l'antenne active qui sera utilisée, on peut alors (bloc 104) déterminer l'orientation relative de cette antenne active par rapport au corps de l'appareil, à partir de la table conservée en mémoire donnant, en fonction du modèle d'appareil, la position de cette antenne par rapport au corps de l'appareil.

Dans le cas particulier où le modèle de l'appareil n'est pas référencé dans la table (bloc 106), on ne prend aucune action particulière, si ce n'est éventuellement d'afficher (bloc 108) un message à l'utilisateur afin qu'il teste les deux orientations possibles et détermine de lui-même la plus performante, par exemple en observant l'indicateur de niveau de signal reçu qui est affiché sur l'écran.

Dans tous les autres cas, le sens d'affichage de l'image sur l'écran est simplement forcé (bloc 110) d'une manière telle que, par rapport à l'axe médian Δ du corps de l'appareil, le haut d'une scène captée par la caméra du drone se situe dans tous les cas du même côté de l'écran que le côté où se situe l'antenne active.

Dès lors, si l'appareil est "bien orienté" par rapport au drone (c'est-à-dire avec l'antenne active tournée vers le drone et non vers l'utilisateur), l'image sera présentée à l'endroit à l'utilisateur, tandis que dans le cas contraire elle lui sera affichée à l'envers : cette inversion, comme indiqué plus haut, constitue un message visuel de mauvaise orientation, conduisant l'utilisateur à spontanément rétablir la situation en retournant l'appareil d'un demi-tour à plat pour rétablir, de son point de vue, une image correcte.

La Figure 6 est un organigramme décrivant l'enchainement 200 des différentes étapes de mise en oeuvre de ce procédé, dans une autre forme de mise en oeuvre de l'invention.

Dans ce cas, il est prévu une première étape (bloc 202) de détermination de la position relative de l'utilisateur par rapport au corps de l'appareil.

Cette position peut être déterminée par des moyens inclinométriques ou accélérométriques incorporés à l'appareil, donnant la direction de la verticale (gravité) par rapport au corps de l'appareil. Comme l'on suppose que l'utilisateur regarde l'écran, la mesure de l'orientation du corps de l'appareil permet de déterminer de quel côté se trouve l'utilisateur par rapport à l'axe longitudinal Δ.

D'autres moyens peuvent être utilisés, par exemple par détection du contact des doigts de l'utilisateur sur l'écran tactile 20. Par rapport à l'axe Δ, le côté où la surface de contact des doigts sera la plus importante permettra de déterminer l'orientation relative de l'appareil par rapport à l'utilisateur.

L'étape suivante (bloc 204) consiste à déterminer celle des antennes qui sera utilisée par la télécommande, *WiFi* ou bien *Bluetooth,* selon le type de drone que l'on souhaite piloter (certains fonctionnant en *Bluetooth,* d'autres en *WiFi*).

Connaissant ainsi l'antenne active qui sera utilisée, on peut alors (bloc 206) déterminer l'orientation relative de cette antenne active par rapport au corps de l'appareil, à partir de la table conservée en mémoire donnant, en fonction du modèle d'appareil, la position de cette antenne par rapport au corps de l'appareil.

Dans le cas particulier où le modèle de l'appareil n'est pas référencé dans la table (bloc 208), on ne prend aucune action particulière, si ce n'est éventuellement d'afficher (bloc 210) un message à l'utilisateur afin qu'il teste les deux orientations possibles et détermine de lui-même la plus performante, par exemple en observant l'indicateur de niveau de signal reçu qui est affiché sur l'écran.

Dans tous les autres cas, l'orientation relative de l'appareil par rapport à l'utilisateur est comparée à l'orientation relative de l'antenne active par rapport au corps de l'appareil (bloc 212) :
- si l'antenne et l'utilisateur sont du même côté (cas des antennes 28b et 28d sur la Figure 2), alors on force l'inversion du sens d'affichage de l'image (bloc 214), de manière que, machinalement, l'utilisateur retourne son appareil pour faire disparaitre cet affichage "antinaturel" ;
- dans le cas contraire, la configuration est considérée comme optimale et aucune action particulière n'est prise (configuration correspondant aux antennes 28a ou 28c de la Figure 2).

## Revendications

1. Un procédé d'optimisation de l'orientation d'un appareil de télécommande (16) par rapport à un drone (10) volant ou roulant télécommandé par cet appareil, l'appareil de télécommande et le drone communiquant entre eux par une liaison radio,
le drone (10) comprenant :
- une caméra video embarquée (14) ; et
- des moyens émetteurs-récepteurs pour ladite liaison radio,
l'appareil de télécommande (16) comprenant:
- un corps d'appareil (18), apte à être tenu à la main par un utilisateur ;
- des moyens émetteurs-récepteurs pour ladite liaison radio, comprenant au moins une antenne d'émission-réception (28a, 28b, 28c, 28d) placée en une position prédéterminée par rapport au corps de l'appareil ; et
- un écran tactile (20) apte à afficher une image captée par la caméra du drone et transmise à l'appareil via ladite liaison radio, et à détecter un contact sur la surface de l'écran d'au moins un doigt de l'utilisateur tenant le corps de l'appareil,
**caractérisé par** les étapes suivantes :
a) détermination (104) de l'antenne active utilisée par les moyens émetteurs-récepteurs de l'appareil pour ladite liaison radio ;
b) détermination du modèle de l'appareil utilisé ;
c) recherche (106) dans une table d'une information d'orientation relative de l'antenne active par rapport au corps de l'appareil,
ladite table étant une table d'un logiciel de pilotage préalablement chargé et mémorisé dans l'appareil,
les entrées respectives de ladite table donnant, pour chaque modèle d'appareil susceptible d'être utilisé pour télécommander le drone, l'information correspondante d'orientation relative de l'antenne de ce modèle ; et
d) affichage de l'image sur l'écran tactile de sorte que le haut d'une scène captée par la caméra du drone apparaisse à l'utilisateur en bas de l'écran si l'orientation relative de l'antenne active par rapport au corps de l'appareil ne correspond pas à la direction dans laquelle se trouve le drone, et apparaisse à l'utilisateur en haut de l'écran si l'orientation relative de l'antenne active par rapport au corps de l'appareil correspond à la direction dans laquelle se trouve le drone.

2. Le procédé de la revendication 1, dans lequel l'information d'orientation de l'antenne active par rapport au corps de l'appareil est une information booléenne indiquant de quel côté se situe l'antenne par rapport à un axe médian (Δ) du corps de l'appareil, cet axe médian s'étendant entre deux côtés opposés de l'appareil aptes à être tenus chacun par une main respective (24, 26 ; 24', 28') de l'utilisateur.

3. Le procédé de la revendication 2, dans lequel l'étape d) comprend un forçage inconditionnel du sens d'affichage de l'image sur l'écran tactile de telle sorte que, par rapport audit axe médian, le haut d'une scène captée par la caméra du drone se situe du même côté de l'écran que le côté où se situe l'antenne active.

4. Le procédé de la revendication 1, dans lequel, si l'étape c) de recherche ne permet pas de trouver une entrée correspondant à l'identifiant du modèle d'appareil, l'étape d) n'est pas exécutée et un message d'avertissement est affiché (110) sur l'écran de l'appareil.

5. Le procédé de la revendication 1 dans lequel :
- les moyens émetteurs-récepteurs de l'appareil comprennent des moyens émetteurs-récepteurs aptes à opérer dans une pluralité de bandes radio distinctes correspondant à une pluralité d'antennes respectives différentes,
- les entrées respectives de ladite table donnent l'information d'orientation relative de l'antenne active pour chaque modèle d'appareil susceptible d'être utilisé ainsi pour chaque bande radio susceptible d'être utilisée par un modèle donné, et
- l'étape a) de détermination de l'antenne active comprend la sélection, parmi la pluralité d'antennes de l'appareil, de l'antenne compatible avec la bande radio utilisée par les moyens émetteurs-récepteurs du drone.

6. Le procédé de la revendication 1, dans lequel il est en outre prévu une étape préalable de détermination d'une information d'orientation relative de l'appareil par rapport à l'utilisateur, et l'étape d) est exécutée conditionnellement en fonction de l'information d'orientation relative de l'appareil par rapport à l'utilisateur.

7. Le procédé de la revendication 6, dans lequel l'étape préalable de détermination d'une information d'orientation relative de l'appareil par rapport à l'utilisateur est mise en oeuvre par mesure accélérométrique ou inclinométrique d'une orientation absolue du corps de l'appareil.

8. Le procédé de la revendication 6, dans lequel l'étape préalable de détermination d'une information d'orientation relative de l'appareil par rapport à l'utilisateur est mise en oeuvre par détection de la région de la surface de l'écran en contact avec le(s) doigt(s) de l'utilisateur tenant le corps de l'appareil.

## Patentansprüche

1. Verfahren zur Optimierung der Ausrichtung eines Fernsteuergeräts (16) relativ zu einer fliegenden oder rollenden Drohne (10), die durch dieses Gerät ferngesteuert wird, wobei das Fernsteuergerät und die Drohne durch eine Funkverbindung miteinander kommunizieren,
wobei die Drohne (10) Folgendes umfasst:
- eine an Bord befindliche Videokamera (14); und
- Sender-Empfänger-Mittel für die Funkverbindung, wobei das Fernsteuergerät (16) Folgendes umfasst:
- einen Gerätekörper (18), der durch einen Benutzer in der Hand gehalten werden kann;
- Sender-Empfänger-Mittel für die Funkverbindung, die mindestens Sende-Empfangs-Antenne (28a, 28b, 28c, 28d) umfassen, die in einer relativ zu dem Körper des Geräts vorherbestimmten Position angeordnet ist; und
- einen berührungsempfindlichen Bildschirm (20), der in der Lage ist, ein Bild anzuzeigen, das von der Kamera der Drohne aufgenommen wird und über die Funkverbindung an das Gerät übertragen wird, und einen Kontakt auf der Oberfläche des Bildschirms mindestens eines Fingers des Benutzers, der den Körpers des Geräts hält, zu detektieren,
**gekennzeichnet durch** die folgenden Schritte:
a) Bestimmen (104) der aktiven Antenne, die von den Sender-Empfänger-Mitteln des Geräts für die Funkverbindung verwendet wird;
b) Bestimmen des Modells des verwendeten Geräts;
c) Suchen (106) in einer Tabelle nach einer Information über die relative Ausrichtung der aktiven Antenne relativ zu dem Körper des Geräts,
wobei die Tabelle eine Tabelle einer Steuersoftware ist, die vorher in das Gerät geladen und darin gespeichert wurde,
wobei die jeweiligen Einträge der Tabelle, für jedes Gerätemodell, das verwendbar ist, um die Drohne fernzusteuern, die entsprechende Information über die relative Ausrichtung der Antenne dieses Modells geben; und
d) Anzeigen des Bildes auf dem berührungsempfindlichen Bildschirm, so dass der obere Teil einer von der Kamera der Drohne aufgenommenen Szene dem Benutzer im unteren Teil des Bildschirms erscheint, wenn die relative Ausrichtung der aktiven Antenne relativ zu dem Körper des Geräts nicht der Richtung entspricht, in der sich die Drohne befindet, und dem Benutzer im oberen Teil des Bildschirms erscheint, wenn die relative Ausrichtung der aktiven Antenne relativ zu dem Körper des Geräts der Richtung entspricht, in der sich die Drohne befindet.

2. Verfahren nach Anspruch 1, bei dem die Information über die Ausrichtung der aktiven Antenne relativ zu dem Körper des Geräts eine Boolesche Information ist, die angibt, auf welcher Seite sich die Antenne relativ zu einer Mittelachse (Δ) des Körpers des Geräts befindet, wobei diese Mittelachse sich zwischen zwei entgegengesetzten Seiten des Geräts erstreckt, die jede durch eine jeweilige Hand (24, 26; 24', 28') des Benutzers gehalten werden können.

3. Verfahren nach Anspruch 2, bei dem Schritt d) ein unkonditionales Erzwingen der Richtung der Anzeige des Bildes auf dem berührungsempfindlichen Bildschirm umfasst, so dass, relativ zu der Mittelachse, der obere Teil einer von der Kamera der Drohne aufgenommene Szene sich auf der gleichen Seite des Bildschirms befindet wie die Seite, wo sich die aktive Antenne befindet.

4. Verfahren nach Anspruch 1, bei dem, wenn Schritt c) des Suchens nicht das Auffinden eines Eintrags gestattet, welcher der Kennung des Gerätemodells entspricht, Schritt d) nicht ausgeführt wird und eine Warnmeldung auf dem Bildschirm des Geräts angezeigt (110) wird.

5. Verfahren nach Anspruch 1, bei dem
- die Sender-Empfänger-Mittel des Geräts Sender-Empfänger-Mittel umfassen, die in einer Vielzahl unterschiedlicher Funkbandbreiten entsprechend einer Vielzahl jeweiliger unterschiedlicher Antennen betrieben werden können,
- die jeweiligen Einträge der Tabelle die Information über die relative Ausrichtung der aktiven Antenne für jedes Gerätemodell, das verwendbar ist, sowie für jede Bandbreite, die durch ein bestimmtes Modell verwendbar ist, geben und
- Schritt a) des Bestimmens der aktiven Antenne das Auswählen, aus einer Vielzahl von Antennen des Geräts, derjenigen Antenne umfasst, die mit der Bandbreite, die von den Sender-Empfänger-Mitteln der Drohne verwendet wird, kompatibel ist.

6. Verfahren nach Anspruch 1, bei dem ferner ein vorheriger Schritt des Bestimmens einer Information über die relative Ausrichtung des Geräts relativ zu dem Benutzer vorgesehen ist und Schritt d) konditional in Abhängigkeit von der Information über die relative Ausrichtung des Geräts relativ zu dem Benutzer ausgeführt wird.

7. Verfahren nach Anspruch 6, bei dem der vorherige Schritt des Bestimmens einer Information über die relative Ausrichtung des Geräts relativ zu dem Benutzer durch Beschleunigungs- oder Neigungsmessung einer absoluten Ausrichtung des Körpers des Geräts erfolgt.

8. Verfahren nach Anspruch 6, bei dem der vorherige Schritt des Bestimmens einer Information über die relative Ausrichtung des Geräts relativ zu dem Benutzer durch Detektion der Region der Oberfläche des Bildschirms in Kontakt mit dem/den Finger(n) des Benutzers, der den Körper des Geräts hält, erfolgt.

## Claims

1. A method for optimizing the orientation of a remote-control device (16) with respect to a flying or rolling drone (10) remote controlled by this device, the remote-control device and the drone communicating between each other through a radio link, the drone (10) comprising:
- an on-board video camera (14); and
- emitter-receiver means for said radio link,
the remote-control device (16) comprising:
- a device body (18), adapted to be held in hand by a user;
- emitter-receiver means for said radio link, comprising at least one emitting-receiving antenna (28a, 28b, 28c, 28d) placed at a predetermined position with respect to the device body; and
- a touch screen (20) adapted to display an image captured by the camera of the drone and transmitted to the device via said radio link, and to detect a contact on the surface of the screen of at least one finger of the user holding the device body,
**characterized by** the following steps:
a) determining (104)the active antenna used by the emitter-receiver means of the device of said radio link;
b) determining the model of the device used;
c) searching (106) the table for information of relative orientation of the active antenna with respect to the device body,
said table being a table of a driving software previously loaded and memorised in the device,
the respective inputs of said table giving, for each device model liable to be used to remote control the drone, the corresponding information of relative orientation of the antenna of this model; and
d) displaying the image on the touch screen so that the top of a scene captured by the camera of the drone appears to the user at the bottom of the screen if the relative orientation of the active antenna with respect to the device body does not correspond to the direction in which the drone is, and appears to the user at the top of the screen if the relative orientation of the active antenna with respect to the device body corresponds to the direction in which the drone is.

2. The method of claim 1, wherein the information of orientation of the active antenna with respect to the device body is Boolean information indicating on which side the antenna is located with respect to a median axis (Δ) of the device body, this median axis extending between two opposite sides of the device which can be held in a respective hand (24, 26; 24', 28') of the user.

3. The method of claim 2, wherein the step d) comprises an unconditional forcing of the direction of display of the image on the touch screen so that, with respect to said median axis, the top of a scene captured by the camera of the drone is located on the same side of the screen as the side on which the active antenna is located.

4. The method of claim 1, wherein, if the searching step c) does not allow finding an input corresponding to the identifier of the device model, the step d) is not executed and a warning message is displayed (110) on the screen of the device.

5. The method of claim 1, wherein:
- the emitter-receiver means of the device comprise emitter-receiver means adapted to operate in a plurality of distinct radio bands corresponding to a plurality of respective different antennas,
- the respective inputs of said table give the information of relative orientation of the active antenna for each device model liable to be used, as well as for each radio band liable to be used by a given model, and
- the step a) of determining the active antenna comprises the selection, among the plurality of antennas of the device, of the antenna that is compatible with the radio band used by the emitter-receiver means of the drone.

6. The method of claim 1, wherein it is further provided a previous step of determining information of relative orientation of the device with respect to the user, and the step (d) is executed conditionally as a function of the information of relative orientation of the device with respect to the user.

7. The method of claim 6, wherein the previous step of determining information of relative orientation of the device with respect to the user is implemented by accelerometric or inclinometric measurement of an absolute orientation of the device body.

8. The method of claim 6, wherein the previous step of determining information of relative orientation of the device with respect to the user is implemented by detection of the region of the surface of the screen in contact with the finger(s) of the user holding the device body.
